(19) **Europäisches Patentamt**
**European Patent Office**
**Office européen des brevets**

(11) **EP 3 726 184 B1**

(12) **FASCICULE DE BREVET EUROPEEN**

(45) Date de publication et mention
de la délivrance du brevet:
**11.06.2025 Bulletin 2025/24**

(21) Numéro de dépôt: **19169525.3**

(22) Date de dépôt: **16.04.2019**

(51) Classification Internationale des Brevets (IPC):
**G01C 21/32** *(2006.01)* **G01C 21/36** *(2006.01)*

(52) Classification Coopérative des Brevets (CPC):
**G01C 21/32; G01C 21/3602**

(54) **PROCÉDÉ ET DISPOSITIF DE DÉTERMINATION DE LA COURBE D'UNE ROUTE**

VERFAHREN UND VORRICHTUNG ZUR BESTIMMUNG DES KURVENVERLAUFS EINER STRASSE

METHOD AND DEVICE FOR DETERMINING THE CURVE OF A ROAD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**21.10.2020 Bulletin 2020/43**

(73) Titulaires:
• **Stellantis Auto SAS**
**78300 Poissy (FR)**
• **Robert Bosch GmbH**
**70442 Stuttgart (DE)**

(72) Inventeurs:
• **INDRE, Marius Traian**
**91370 Verrieres le Buisson (FR)**
• **DUMITRESCU, Cosmin**
**75005 Paris 05 (FR)**
• **LINCONNU, Martial**
**75015 Paris 15 (FR)**
• **GAUTHIER, Pierre Clement**
**92100 Boulogne Billancourt (FR)**
• **CERNY, Thomas**
**70839 Gerlingen-Schillerhöhe (DE)**

(74) Mandataire: **ESIP**
**Stellantis**
**Service REIP**
**2-10, boulevard de l'Europe**
**78300 Poissy (FR)**

(56) Documents cités:
**JP-A- 2001 331 787      US-A1- 2015 353 085
US-A1- 2016 259 335**

• **POLYCHRONOPOULOS A ET AL: "Extended path prediction using camera and map data for lane keeping support", 2005 IEEE INTELLIGENT TRANSPORTATION SYSTEMS CONFERENCE (ITSC) ; VIENNA, AUSTRIA; 13 - 16 SEPTEMBER 2005, EEE, PISCATAWAY, NJ, USA, 13 September 2005 (2005-09-13), pages 602 - 607, XP010843091, ISBN: 978-0-7803-9215-1, DOI: 10.1109/ITSC.2005.1520116**

EP 3 726 184 B1

**Description**

**Domaine technique**

L'invention concerne les systèmes de détermination du tracé ou de la courbure d'une route et plus particulièrement un système d'aide à la conduite basé sur la détection du tracé ou de la courbure de la route devant le véhicule. L'invention concerne également les véhicules, par exemple automobile, comprenant un tel système.

**Arrière-plan technologique**

De nombreux systèmes d'aide à la conduite sont aujourd'hui proposés dans le but d'améliorer les conditions de sécurité de circulation. Parmi ces systèmes, certains proposent d'assister le conducteur dans les manœuvres de changement de voie de circulation, par exemple pour que soit réalisé un changement de voie semi-automatique, et ce à des vitesses pouvant aller jusqu'à 180 km/h.

Pour qu'une telle manœuvre soit réalisée en toute sécurité, il est nécessaire d'avoir une visibilité de la voie et de son tracé sur une distance correspondant à 4 secondes de temps de trajet. Pour une vitesse de 180 km/h, un trajet de 4 secondes correspond à une distance parcourue égale à 200 m.

Les systèmes de détection des lignes de marquage sur la route ne permettent aujourd'hui de déterminer le tracé de la route ou sa courbure que sur une distance maximale de 120 m devant le véhicule.

Le document US 2016/259335 divulgue un appareil de commande de déplacement pour un véhicule qui utilise une technique de conduite automatique.

Le document US 2015/0353085 A1 divulgue un système pour la conduite d'un véhicule autonome ou semi-autonome, où la géométrie de la route sur l'horizon électronique du véhicule est calculée en fusionnant la géométrie obtenue par des données caméra sur une distance où les données caméra sont fiables (i.e. erreurs inférieures à un certain seuil), et la géométrie obtenue par des données cartographiques au-delà de ladite distance.

Le document intitulé "Extended path prediction using camera and map data for lane keeping support", Polychronopoulos A. et al., IEEE Intelligent Transportation Systems Conference (ITSC), Vienna, Austria, 13-16 September 2005, EEE, Piscataway, NJ, USA, 13 septembre 2005 (2005-09-13), pages 602-607 (XP010843091), divulgue un système permettant d'étendre la géométrie de la route sur l'horizon électronique d'un véhicule obtenue par des données caméra avec la géométrie de la route obtenue par des données cartographiques.

Le document JP 2001 331787 A divulgue un système pour la conduite autonome déterminant la géométrie de la route en fusionnant la géométrie obtenue par des données caméra et la géométrie obtenue par des données cartographiques.

**Résumé de l'invention**

Un objet de la présente invention est de proposer une solution pour déterminer le tracé de la route ou sa courbure sur une distance adaptée à une vitesse supérieure à 130 km/h. Selon un premier aspect, l'invention concerne un procédé de détermination de données représentatives du tracé d'une route dans un repère cartésien à deux dimensions, le repère étant associé à un véhicule circulant sur la route, le repère étant défini par un axe longitudinal et un axe latéral, le procédé comprenant les étapes de :

- détermination d'un premier ensemble de premiers points de coordonnées $(x_1, y_1)$ dans le repère à partir de données représentatives d'au moins une image de l'environnement routier devant le véhicule, les premiers points étant représentatifs de la courbure de la route entre une première abscisse minimale et une première abscisse maximale selon l'axe longitudinal, la première abscisse minimale correspondant à l'origine du repère ;
- détermination d'un deuxième ensemble de deuxièmes points de coordonnées $(x_2, y_2)$ dans le repère à partir de données de cartographie de l'environnement routier du véhicule, les deuxièmes points étant représentatifs de la courbure de la route entre une deuxième abscisse minimale et une deuxième abscisse maximale selon l'axe longitudinal, la deuxième abscisse minimale correspondant à l'origine du repère et la deuxième abscisse maximale étant supérieure à la première abscisse minimale, chaque premier point du premier ensemble correspondant à un deuxième point du deuxième ensemble en ce que le premier point et le deuxième point correspondant ont une même abscisse ;
- détermination de la première valeur d'abscisse la plus petite pour laquelle la valeur absolue de la différence entre l'ordonnée d'un premier point et l'ordonnée du deuxième point correspondant est supérieure à une valeur seuil ;
- modification de la valeur de l'ordonnée de chaque deuxième point par l'ajout de la différence ;
- détermination des données représentatives du tracé de la route à partir des premiers points dont la première abscisse est inférieure à la première valeur d'abscisse la plus petite et à partir des deuxièmes points dont la deuxième abscisse est supérieure à la première valeur d'abscisse la plus petite.

Selon une variante, le premier ensemble de premiers points de coordonnées est déterminé à partir d'une fonction polynomiale du troisième ordre, les coefficients de la fonction étant déterminés à partir des données représentatives de la au moins une image de l'environnement routier devant le véhicule.

Selon encore une variante, la détermination d'un deuxième ensemble de deuxièmes points comprend les étapes suivantes :

- détermination d'un ensemble de valeurs représentatives de la courbure de la route à partir de données de cartographie de l'environnement routier devant le véhicule, chaque valeur de l'ensemble étant associée à une distance par rapport au véhicule selon un repère différent du repère cartésien à deux dimensions ;
- transformation de l'ensemble de valeurs et des distances associées en le deuxième ensemble de deuxièmes points exprimés dans le repère cartésien à deux dimensions. Selon une variante supplémentaire, la transformation comprend, pour un couple de deuxièmes points A et B :

   - intégration de la courbure entre les deuxièmes points A et B pour déterminer un angle représentatif de la courbure ;
   - intégration de l'angle représentatif de la courbure pour déterminer un angle de courbure dans le repère cartésien ;
   - calcul des coordonnées du point B à partir des coordonnées du point A, de l'angle de courbure dans le repère cartésien et d'une distance parcourue ente les points A et B. Selon une autre variante, la valeur seuil correspond à un pourcentage de la largeur de la route.

Selon encore une variante, la largeur est déterminée à partir de fonctions polynomiales représentatives des marquages au sol gauche et droite de la route, les marquages étant déterminés à partir des données représentatives de la au moins une image de l'environnement routier devant le véhicule.

Selon une variante supplémentaire, la première abscisse maximale est égale à 120 mètres.

Selon un deuxième aspect, l'invention concerne un dispositif de détermination de données représentatives du tracé d'une route dans un repère cartésien à deux dimensions, le repère étant associé à un véhicule circulant sur la route, le repère étant défini par un axe longitudinal et un axe latéral, le dispositif comprenant une mémoire associée à au moins un processeur configuré pour mettre en œuvre les étapes du procédé tel que décrit ci-dessus selon le premier aspect de l'invention.

Selon un troisième aspect, l'invention concerne un véhicule automobile comprenant le dispositif tel que décrit ci-dessus selon le deuxième aspect de l'invention.

Selon un quatrième aspect, l'invention concerne un programme d'ordinateur qui comporte des instructions adaptées pour l'exécution des étapes du procédé selon le premier aspect de l'invention, ceci notamment lorsque le programme d'ordinateur est exécuté par au moins un processeur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

Selon un cinquième aspect, l'invention concerne un support d'enregistrement lisible par un ordinateur sur lequel est enregistré un programme d'ordinateur comprenant des instructions pour l'exécution des étapes du procédé selon le premier aspect de l'invention.

D'une part, le support d'enregistrement peut être n'importe quel entité ou dispositif capable de stocker le programme. Par exemple, le support peut comporter un moyen de stockage, tel qu'une mémoire ROM, un CD-ROM ou une mémoire ROM de type circuit microélectronique, ou encore un moyen d'enregistrement magnétique ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon l'invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

**Brève description des figures**

D'autres caractéristiques et avantages de l'invention ressortiront de la description des modes de réalisation non limitatifs de l'invention ci-après, en référence aux figures 1 à 9 annexées, sur lesquelles :

   [Fig. 1] illustre de façon schématique un processus de détermination de données représentatives du tracé d'une route sur laquelle circule un véhicule, selon un exemple de réalisation particulier de la présente invention ;

   [Fig. 2] illustre schématiquement un repère associé à un véhicule circulant sur la route de la figure 1, selon un exemple de réalisation particulier de la présente invention ;

   [Fig. 3] illustre schématiquement une étape du processus de la figure 1, selon un exemple de réalisation particulier de la présente invention ;

   [Fig. 4] illustre schématiquement des données représentatives de la courbure de la route de la figure 1 dans un premier repère, selon un exemple de réalisation particulier de la présente invention ;

[Fig. 5] illustre schématiquement des données représentatives de la courbure de la route de la figure 1 dans le repère de la figure 2, selon un exemple de réalisation particulier de la présente invention ;

[Fig. 6] illustre schématiquement la comparaison de deux ensembles de données représentatives de la courbure de la route de la figure 1 dans le repère de la figure 2, selon un exemple de réalisation particulier de la présente invention ;

[Fig. 7] illustre schématiquement la fusion des deux ensembles de données représentatives de la courbure de la route de la figure 6, selon un exemple de réalisation particulier de la présente invention ;

[Fig. 8] illustre schématiquement un dispositif configuré pour la détermination de données représentatives du tracé d'une route selon le processus de la figure 1 et/ou le procédé de la figure 9, selon un exemple de réalisation particulier de la présente invention ;

[Fig. 9] illustre schématiquement un procédé de détermination de données représentatives du tracé d'une route mis en œuvre dans le dispositif de la figure 8, selon un exemple de réalisation particulier de la présente invention.

## Description des modes de réalisation

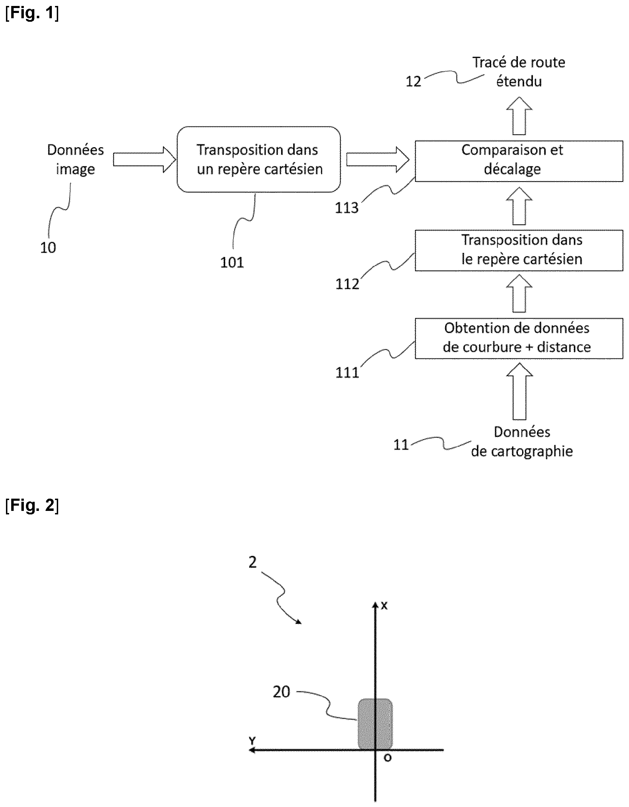

Un procédé de détermination de données représentatives du tracé et/ou de la courbure d'une route et un dispositif mettant en œuvre un tel procédé vont maintenant être décrits dans ce qui va suivre en référence conjointement aux figures 1 à 9. Des mêmes éléments sont identifiés avec des mêmes signes de référence tout au long de la description qui va suivre.

[Fig. 1] illustre de façon schématique un processus de détermination de données représentatives du tracé et/ou de courbure d'une route sur laquelle circule un véhicule, selon un exemple de réalisation particulier et non limitatif de la présente invention. Le processus est par exemple mis en œuvre dans un ou plusieurs calculateurs embarqués dans le véhicule. La route correspond par exemple à une voie de circulation sur laquelle se déplace le véhicule ou à la route comprenant la voie de circulation.

Des données d'image 10 de l'environnement routier situé devant le véhicule sont reçues d'une ou plusieurs caméras. Ces données 10 correspondent par exemple à des données RGB (de l'anglais « Red, Green, Blue » ou en français « Rouge, Vert, Bleu ») de pixels d'une ou plusieurs images acquises par la ou les caméras. La ou les caméras sont par exemple embarquées dans le véhicule et avantageusement disposées à l'avant du véhicule, par exemple au centre de la calandre avant ou sur le pare-brise. Selon un autre exemple, les données d'images 10 sont acquises par une caméra d'un dispositif mobile de type téléphone intelligent (de l'anglais « Smartphone ») ou tablette, le dispositif mobile étant par exemple embarqué dans le véhicule et disposé de telle manière à couvrir l'environnement routier situé devant le véhicule dans son champ de vision. Le point de vue associé aux données d'image 10 correspond au point de vue du véhicule, c'est-à-dire que l'environnement routier représenté sur les données d'image 10 est vu depuis le véhicule, dans le sens de circulation du véhicule.

Selon une variante de réalisation, les données d'image 10 comprennent (ou sont associées à) des données de profondeur ou de distance (par exemple exprimées en mètre(s)) obtenues par exemple d'un capteur de type lidar (de l'anglais « Light Detection And Ranging » ou en français « Détection et estimation de la distance par la lumière »).

Lors d'une opération 101, les données 10 sont analysées et traitées pour détecter les marquages de bord ou milieu de route (par exemple les lignes blanches continues ou en pointillées tracées sur les bords ou au milieu de la chaussée). Les données 10 sont transformées ou projetées pour passer d'un repère image en un repère cartésien à deux dimensions 2 associé au véhicule. Le repère cartésien 2 est illustré en regard de la figure 2 ([Fig. 2]) et possède par exemple les caractéristiques suivantes :

-   un centre 'O' du repère situé par exemple au milieu de l'essieu arrière du véhicule 20 ;
-   un axe (OX) correspondant à l'axe longitudinal avec des valeurs d'abscisse positives devant le centre 'O' dans le sens de circulation du véhicule 20 et des valeurs d'abscisse négative derrière le centre 'O' dans le sens de circulation du véhicule 20 ;
-   un axe (OY) orthogonal à l'axe (OX) correspondant à l'axe latéral avec des valeurs d'ordonnée positives à gauche (dans le sens de circulation du véhicule 20) du centre 'O' du repère et des valeurs d'ordonnée négatives à droite (dans le sens de circulation du véhicule 20) du centre 'O'.

Bien entendu, le repère cartésien 2 peut être différent du celui décrit ci-dessus. Par exemple, le centre 'O' du repère peut être situé à l'avant du véhicule (par exemple au milieu de la calandre ou du pare-chocs avant) ou correspondre à la localisation de la caméra d'acquisition des données d'image 10.

Le tracé de la route est défini selon un modèle obtenu des données d'image exprimé dans le repère cartésien 2, selon toute méthode connue de l'homme du métier. Le modèle de la route correspond à une fonction polynomiale de 2ème ordre ou de 3ème ordre telle que :

$$y_c(x_c) = C_3 * x_c^3$$

Où ($x_c$, $y_c$) correspondent aux coordonnées d'un point C du tracé ou de la courbure de la route, exprimées dans le repère cartésien 2.

La fonction polynomiale s'exprime également comme suit :

$$y_c(x_c) = C_3 x_c^3 + C_2 x_c^2 + C_1 x_c + C_0$$

Où $C_0$, $C_1$, $C_2$ et $C_3$ correspondent aux coefficients de la fonction obtenus à partir des données images 10. La fonction est définie sur un intervalle de valeurs d'abscisse compris entre $X_{c\_mini}$ et $X_{c\_maxi}$ ; $X_{c\_mini}$ est typiquement égal à 0 et $X_{c\_maxi}$ est par exemple égale à 50 m, 100 m, 120 m ou 140 m. Par ailleurs, $y_c$ ($X_{c\_mini}$) = 0.

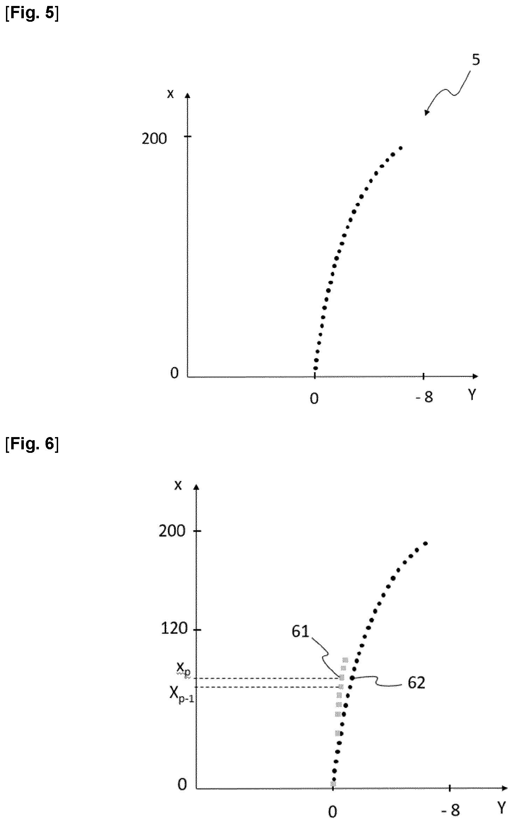

Un premier ensemble de premiers points de coordonnées (X1, Y1) représentatifs du tracé de la route (ou de sa courbure) est ainsi obtenu pour un intervalle de distance selon l'axe longitudinal (OX) compris entre $X_{c\_mini}$ et $X_{c\_maxi}$. Ces premiers points sont illustrés avec des carrés gris sur la figure 6 ([Fig. 6]).

Des données de cartographie 11 sont reçues d'un système de cartographie. Les données de cartographie sont par exemple obtenues à partir d'une application de navigation basée sur un système de navigation satellitaire, par exemple de type Galileo ou GPS (de l'anglais « Global Positioning System », ou « Système mondial de positionnement » en français). Selon un autre exemple, les données de cartographies sont reçues d'un espace de stockage distant (par exemple du « cloud ») via une connexion sans fil utilisée dans un réseau mobile tel qu'un réseau 4G (ou LTE Advanced selon 3GPP release 10 - version 10) ou 5G.

Lors d'une opération 111, des données représentatives de la courbure de la route sur laquelle circule le véhicule sont obtenues à partir des données de cartographie 11. Ces données comprennent par exemple :

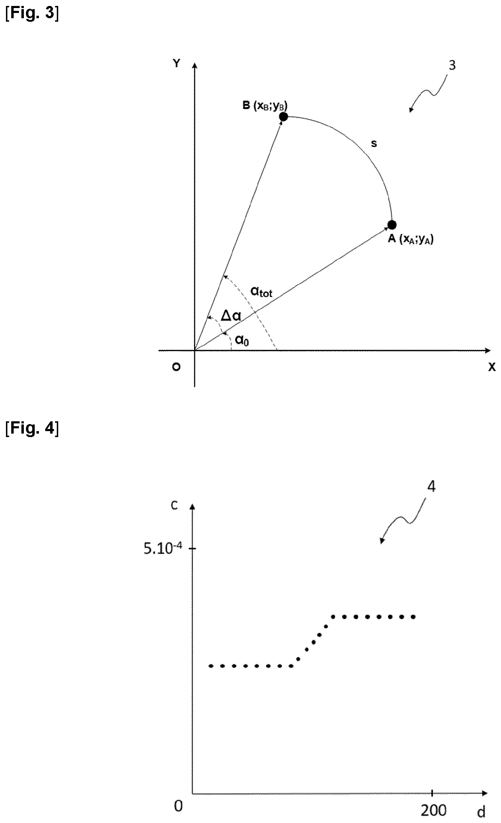

- des valeurs de courbure, correspondant en un ensemble de valeurs discrètes de la courbure de la route, par exemple devant le véhicule ou autour du véhicule sur un intervalle de distance déterminé ;
- des valeurs de distance associées aux valeurs de courbure, correspondant en un ensemble de valeurs discrètes ; chaque valeur indique par exemple la distance en mètre(s) entre le véhicule et le point associé à la valeur de courbure considérée de l'ensemble de valeurs discrètes de courbures ; cette distance correspond à une distance formée en suivant le tracé de la route ; l'ensemble de valeurs de distance est par exemple compris dans un intervalle bornée par une valeur minimale (par exemple - 200 m, - 100 m ou 0 m, - 200 m signifiant 200 m derrière le véhicule en considérant le sens de circulation du véhicule) et par une valeur maximale (par exemple 200 m, 500 m, 1000 m, 2000 m, 200 m signifiant 200 m devant le véhicule en considérant le sens de circulation du véhicule). La valeur maximale de distance est avantageusement supérieure à $X_{c\_maxi}$. Les données représentatives de la courbure de la route, c'est-à-dire le couple valeurs de courbure / valeurs de distances associées, forment un ensemble de points dans un repère correspondant au repère de la route. Cet ensemble de points est représenté en regard de la figure 4 ([Fig. 4]) avec une courbe 4 de points, l'axe des abscisses correspondant à la distance 'd' et l'axe des ordonnées correspondant à la courbure 'c'.

Lors d'une opération 112, les données représentatives de la courbure de la route exprimées dans le repère de la figure 4 sont transposées / projetées dans le repère cartésien 2. Cette opération 112 est décrite en s'appuyant sur la figure 3 ([Fig. 3]) qui illustre la détermination des coordonnées de deuxièmes points représentatif du tracé de la route (ou de sa courbure) dans le repère cartésien 2 à partir des données de courbure et de distance obtenues des données de cartographie 11.

Les données de courbure et de distance obtenues des données de cartographie 11 sont transformées en un deuxième ensemble de deuxièmes points représentatifs du tracé de la route (ou de sa courbure) dans le repère cartésien 2, ce deuxième ensemble de deuxièmes points correspondant par exemple en un vecteur de deuxièmes points avec des coordonnées (X2, Y2) dans le repère cartésien 2, c'est-à-dire selon l'axe des abscisses (OX) et selon l'axe des ordonnées (OY). L'opération 112 comprend, en s'appuyant sur un exemple de détermination des coordonnées appliquée à 2 deuxièmes points A et B :

- intégration de la courbure : en prenant comme hypothèse que la courbure est constante, l'intégration de la courbure fournit l'angle $\Delta\alpha$ pour parcourir la courbe de A à B sur l'arc 's', soit $\Delta\alpha$ = s * courbure ;
- intégration de l'angle $\Delta\alpha$ : l'intégration de l'angle $\Delta\alpha$ en parcourant la courbe de A vers B fournit l'angle total $\alpha_{tot}$ par rapport à l'axe (OX) du repère cartésien 2, soit : $\alpha_{tot} = \alpha_0 + \Delta\alpha$ ;
- calcul des coordonnées X et Y : les coordonnées $X_{2,B}$ et $Y_{2,B}$ du point B sont calculées en utilisant les coordonnées $X_{2,A}$ et $Y_{2,A}$ du point A et la distance parcourue (définie par $\Delta x$ et $\Delta y$) pour aller du point A au point B, soit $\Delta x$ = s * cos($\alpha_{tot}$), $\Delta y$ = s * sin($\alpha_{tot}$), ce qui donne $X_{2,B} = X_{2,A} + \Delta x$ et $Y_{2,B} = Y_{2,A} + \Delta y$.

Le calcul du deuxième ensemble de deuxièmes points est initialisé avec les coordonnées d'un point origine $X_{2,0}$ et $Y_{2,0}$ avec par exemple $X_{2,0}$ = 0 et $Y_{2,0}$ = 0.

En utilisant par exemple un pas d'échantillonnage de 4 m, les valeurs de courbure et les valeurs de distance associées sont interpolées de 0 m à 200 m par exemple pour obtenir 50 valeurs discrètes de courbure et distances associées, 1 valeur tous les 4 m.

Un deuxième ensemble de deuxièmes points de coordonnées (X2, Y2) dans le repère cartésien 2 est ainsi obtenu pour représenter le tracé de la route (ou sa courbure) dans le repère cartésien 2.

Le deuxième ensemble de deuxièmes points ainsi obtenu est illustré sur la figure 5 ([Fig. 5]) par une courbe 5 de deuxièmes points représentés avec des points noirs.

Lors d'une opération 113, le premier ensemble de premiers points et le deuxième ensemble de deuxièmes points sont comparés. L'opération 113 est illustrée en s'appuyant sur l'exemple de la figure 6 ([Fig. 6]). Le premier ensemble de premiers points (illustrés avec des carrés gris sur la figure 6) et le deuxième ensemble de deuxièmes points (illustrés avec des points noirs sur la figure 6) sont avantageusement déterminés ou générés de telle manière que chaque premier point du premier ensemble de point corresponde à un unique deuxième point du deuxième ensemble. Un premier point est dit correspondant d'un deuxième point (et inversement) en ce que les premier et deuxième points ont la même abscisse sur l'axe longitudinal (OX) du repère cartésien 2.

La comparaison du premier ensemble de premiers points avec le deuxième ensemble de deuxièmes points consiste en une comparaison 2 à 2 des premier et deuxième points correspondants. Cette comparaison consiste en la détermination du premier couple de points correspondant pour lequel la valeur absolue de la différence entre les ordonnées est supérieur à une valeur déterminée (aussi appelée valeur seuil). La comparaison se fait en parcourant les couples de premier et deuxième points selon un ordre croissant de leur abscisse, de la valeur minimale d'abscisse (c'est-à-dire 0) jusqu'à déterminer la plus petite valeur d'abscisse pour laquelle le couple de premier et deuxième points correspondant présente une différence entre leurs ordonnées respectives supérieure à la valeur déterminée. En s'appuyant sur l'exemple de la figure 6, le premier couple de premier et deuxième points correspondant pour lequel la valeur absolue de la différence entre les ordonnées est supérieure à une valeur déterminée correspond au couple premier point 61 / deuxième point 62, ayant tous les 2 la même abscisse Xp. Cela signifie que la valeur absolue de la différence entre les ordonnées du couple premier point / deuxième point précédent, c'est-à-dire avec la valeur d'abscisse $X_{p-1}$ immédiatement inférieure à Xp, est inférieure à la valeur déterminée.

La valeur déterminée (ou valeur seuil) correspond à une valeur paramétrable. Cette valeur correspond par exemple en une valeur déterminée par un utilisateur ou en une valeur correspondant en un pourcentage de la largeur de la route (par exemple 3 %, 5 %, 7 %, 10 %).

A l'issue de la comparaison, les ordonnées des deuxièmes points sont chacune modifiées en ajoutant la différence entre les ordonnées des points 61 et 62, de telle manière que l'ordonnée du premier point 61 soit égale à l'ordonnée du deuxième point 62.

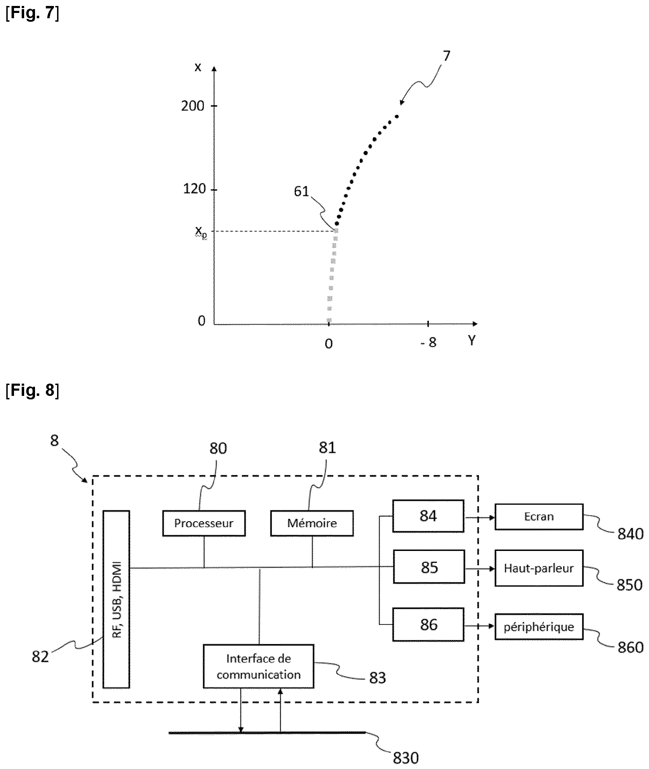

Un tracé de la route sur une distance supérieure à la distance maximale obtenue à partir des données d'image 10, c'est-à-dire supérieure à $X_{c\_maxi}$, est obtenu en utilisant les deuxièmes points. Un tel tracé est obtenu en fusionnant les premiers points dont l'abscisse est inférieure à Xp et les deuxièmes points dont l'abscisse est supérieure à Xp. Une telle fusion est illustrée sur la figure 7 ([Fig. 7]) avec la courbe 7. La courbe 7 comprend une première partie constituée de premier points (pour les abscisses comprises entre 0 et Xp) et une deuxième partie (dans le prolongement de la première partie) constituée de deuxièmes points (pour les abscisses comprises entre Xp et la valeur maximale de distance pour laquelle les deuxièmes points ont été obtenus à partir des données cartographiques, par exemple 200 m).

Un tel processus permet de déterminer le tracé de la route (ou sa courbure) sur une distance supérieure à la distance maximale pour laquelle il est possible de déterminer le tracé d'une route (ou sa courbure) à partir de données image 10.

Selon un exemple particulier de réalisation, l'opération 113 comprend :

- calcul de la largeur de la route : en utilisant les coefficients $C_0$ de chaque fonction polynomiale modélisant les marquages gauche et droite de la route fournis par les données d'image 10, la largeur de la route $l_{route}$ est obtenue par : $l_{route} = C_{0,gauche} - C_{0,droit}$ ;
- détermination de la valeur seuil, par exemple 5 % de la largeur de la route, dénotée $X_{5\%}$ et correspondant pour Xp ; cette valeur $X_{5\%}$ correspond à la première valeur d'abscisse pour laquelle la valeur absolue de la différence entre les ordonnées $Y_{1/5\%}$, $Y_{2/5\%}$ des premier et deuxième points correspondant à cette abscisse $X_{5\%}$ est supérieur à 5% de la largeur de la route, soit $|Y_{1/5\%} - Y_{2/5\%}| > 0.05 * l_{route}$ ;
- décalage des deuxièmes points, c'est-à-dire modification de leurs ordonnées Y2, de telle manière que $Y_{1/5\%} = Y_{2/5\%}$ ;
- détermination du tracé de la route sur l'intervalle (0, 200 m) en conservant les premiers points dont l'abscisse est inférieure à $X_{5\%}$ et en ajoutant les deuxièmes points dont l'abscisse est supérieure à $X_{5\%}$, tel qu'illustré sur la figure 7 ([Fig. 7]).

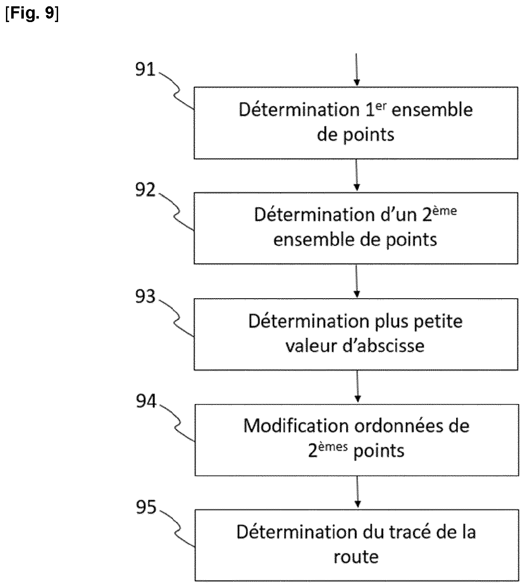

[Fig. 8] illustre schématiquement un dispositif 8 configuré pour la mise en œuvre des opérations de la figure 1 et/ou pour la mise en œuvre des étapes du procédé de la figure 9, selon un exemple de réalisation particulier et non limitatif de la présente invention. Des exemples d'un tel dispositif 8 comprennent, sans y être limités, différents appareils électroniques tels qu'un téléphone intelligent (de l'anglais « smartphone »), une tablette, un ordinateur portable, un équipement électronique embarqué dans le véhicule, par exemple un calculateur. Les éléments du dispositif 8, individuellement ou en combinaison, peuvent être intégrés dans un unique circuit intégré, dans plusieurs circuits intégrés, et/ou dans des composants discrets. Le dispositif 8 peut être réalisé sous la forme de circuits électroniques ou de modules logiciels (ou informatiques) ou encore d'une combinaison de circuits électroniques et de modules logiciels.

Le dispositif 8 comprend un (ou plusieurs) processeur(s) 80 configurés pour l'exécution des instructions du ou des logiciels embarqués dans le dispositif 8. Le processeur 80 peut inclure de la mémoire intégrée, une interface d'entrée/sortie, et différents circuits connus de l'homme du métier. Le dispositif 8 comprend en outre au moins une mémoire 81, par une mémoire volatile at/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique. La mémoire sert par exemple de support de stockage pour les données d'image 10, les données de cartographie 11, les coordonnées des différents ensembles de points représentatifs de la courbure d'une route.

Le code informatique comprenant les instructions à charger et exécuter par le processeur est par exemple stocké sur la mémoire ou le dispositif de stockage mémoire 81.

Selon un mode de réalisation particulier et non limitatif, le dispositif 8 comprend un bloc 82 d'éléments d'interface pour communiquer avec des dispositifs externes, par exemple le système GPS ou les caméras. Les éléments d'interface du bloc 82 comprennent une ou plusieurs des interfaces suivantes :

- interface radiofréquence RF, par exemple de type Bluetooth® ou Wi-Fi® ou de type réseau mobile tel qu'un réseau 4G (ou LTE Advanced selon 3GPP release 10 - version 10) ou 5G;
- interface USB (de l'anglais « Universal Serial Bus » ou « Bus Universel en Série » en français) ;
- interface HDMI (de l'anglais « High Definition Multimedia Interface », ou « Interface Multimedia Haute Definition » en français).

Selon un autre mode de réalisation particulier, le dispositif 8 comprend une interface de communication 83 qui permet d'établir une communication avec d'autres dispositifs, par exemple d'autres calculateurs. L'interface de communication 83 correspond par exemple à un transmetteur configuré pour transmettre et recevoir des informations et/ou des données via le canal de communication 830, par exemple un réseau de type CAN (de l'anglais « Controller Area Network » ou en français « Réseau de contrôleurs »). L'interface de communication 83 comprend par exemple un modem et/ou une carte réseau et le canal de communication peut par exemple être mis en œuvre dans un medium filaire et/ou sans fil.

Selon un mode de réalisation particulier supplémentaire, le dispositif 8 peut fournir des signaux de sortie à un ou plusieurs dispositifs externes, tels qu'un écran d'affichage 840, un ou des haut-parleurs 850 et/ou d'autres périphériques 860 (système de projection) via respectivement des interfaces de sortie 84, 85 et 86. Selon une variante, l'un ou l'autre des dispositifs externes est intégré au dispositif 8. L'écran d'affichage 840 correspond par exemple à l'écran, tactile ou non.

[Fig. 9] illustre un organigramme des différentes étapes d'un procédé de détermination de données représentatives du tracé d'une route, selon un exemple de réalisation particulier et non limitatif de la présente invention. Le procédé est par exemple mis en œuvre par le dispositif 8. Une route correspond par exemple à une voie de circulation sur laquelle évolue un véhicule ou à un ensemble de voies dont la voie de circulation sur laquelle évolue un véhicule. La notion de route est donc à prendre dans un sens large regroupant les notions de voie de circulation du véhicule ou ensemble de voie comprenant la voir de circulation du véhicule.

Dans une première étape 91, un premier ensemble de premiers points est déterminée. Chaque premier point est exprimé avec des coordonnées (x1, y1) dans un repère cartésien à 2 dimensions associé au véhicule circulant sur la route, une première dimension correspondant à un axe longitudinal (OX) et une deuxième dimension correspondant à un axe latéral (OY). Le premier ensemble de premiers points est déterminé à partir de données représentatives d'au moins une image de l'environnement routier devant le véhicule. Les premiers points sont représentatifs de la courbure de la route entre une première abscisse minimale et une première abscisse maximale selon l'axe longitudinal, la première abscisse minimale correspondant à l'origine du repère cartésien.

Dans une deuxième étape 92, un deuxième ensemble de deuxièmes points de coordonnées (x2, y2) est déterminé dans le repère cartésien à 2 dimensions à partir de données de cartographie de l'environnement routier du véhicule. Les deuxièmes points sont représentatifs de la courbure de la route entre une deuxième abscisse minimale et une deuxième abscisse maximale selon l'axe longitudinal. La deuxième abscisse minimale correspondant à l'origine du repère et la deuxième abscisse maximale est avantageusement supérieure à la première abscisse minimale. Chaque premier point du premier ensemble correspond à un deuxième point unique du deuxième ensemble, un premier point et un deuxième point étant correspondant en ce qu'ils ont la même abscisse dans le repère cartésien à 2 dimensions.

Dans une troisième étape 93, la première valeur d'abscisse la plus petite pour laquelle la valeur absolue de la différence entre l'ordonnée d'un premier point et l'ordonnée du deuxième point correspondant est supérieure à une valeur seuil est déterminée, en comparant les premiers points et les deuxièmes points.

Dans une quatrième étape 94, la valeur de l'ordonnée de chaque deuxième point est modifiée en ajoutant la valeur de la différence déterminée à l'étape 93.

Dans une cinquième étape 95, les données représentatives du tracé et/ou de la courbure de la route sont déterminées à partir des premiers points dont la première abscisse est inférieure à la première valeur d'abscisse la plus petite (déterminée à l'étape 93) et à partir des deuxièmes points dont la deuxième abscisse est supérieure à la première valeur d'abscisse la plus petite.

Bien entendu, l'invention ne se limite pas aux modes de réalisation décrits ci-avant mais s'étend à un procédé d'aide à la conduite d'un véhicule utilisant les données représentatives du tracé de la route, et au dispositif configuré pour la mise en œuvre d'un tel procédé.

L'invention concerne également un véhicule embarquant un dispositif configuré pour la détermination de données représentatives du tracé d'une route et/ou le système d'aide à la conduite utilisant les données représentatives du tracé de la route.

**Revendications**

1. Procédé, mis en œuvre par ordinateur, de détermination de données représentatives du tracé d'une route dans un repère cartésien (2) à deux dimensions, ledit repère étant associé à un véhicule (20) circulant sur ladite route, ledit repère (2) étant défini par un axe longitudinal et un axe latéral, ledit procédé comprenant les étapes de :

   - détermination (91) d'un premier ensemble de premiers points de coordonnées (x1, y1) dans ledit repère à partir de données (10) représentatives d'au moins une image de l'environnement routier devant ledit véhicule (20), lesdits premiers points étant représentatifs de la courbure de la route entre une première abscisse minimale et une première abscisse maximale selon l'axe longitudinal, ladite première abscisse minimale correspondant à l'origine dudit repère (2) ;
   - détermination (92) d'un deuxième ensemble de deuxièmes points de coordonnées (x2, y2) dans ledit repère (2) à partir de données (11) de cartographie de l'environnement routier dudit véhicule (20), lesdits deuxièmes points étant représentatifs de la courbure de la route entre une deuxième abscisse minimale et une deuxième abscisse maximale selon l'axe longitudinal, ladite deuxième abscisse minimale correspondant à l'origine dudit repère et ladite deuxième abscisse maximale étant supérieure à ladite première abscisse minimale, chaque premier point du premier ensemble correspondant à un deuxième point du deuxième ensemble en ce que le premier point et le deuxième point correspondant ont une même abscisse ;
   - détermination (93) de la première valeur d'abscisse la plus petite ($X_p$) pour laquelle la valeur absolue de la différence entre l'ordonnée d'un premier point (61) et l'ordonnée du deuxième point (62) correspondant est supérieure à une valeur seuil ;
   - modification (94) de la valeur de l'ordonnée de chaque deuxième point du deuxième ensemble par l'ajout de ladite différence ;
   - détermination (95) desdites données représentatives du tracé de la route à partir des premiers points dont la première abscisse est inférieure à ladite première valeur d'abscisse la plus petite et à partir des deuxièmes points dont la deuxième abscisse est supérieure à ladite première valeur d'abscisse la plus petite.

2. Procédé selon la revendication 1, pour lequel ledit premier ensemble de premiers points de coordonnées est déterminé à partir d'une fonction polynomiale du troisième ordre, les coefficients de ladite fonction étant déterminés à partir des données (10) représentatives de ladite au moins une image de l'environnement routier devant ledit véhicule (20).

3. Procédé selon l'une quelconque des revendications 1 et 2, pour lequel ladite détermination d'un deuxième ensemble de deuxièmes points comprend les étapes suivantes :

   - détermination d'un ensemble de valeurs représentatives de la courbure de la route à partir de données de cartographie dudit environnement routier devant ledit véhicule, chaque valeur dudit ensemble étant associée à une distance par rapport au véhicule selon un repère différent dudit repère cartésien à deux dimensions ;
   - transformation dudit ensemble de valeurs et des distances associées en ledit deuxième ensemble de deuxièmes points exprimés dans ledit repère cartésien à deux dimensions.

4. Procédé selon la revendication 3, pour lequel ladite transformation comprend, pour un couple de deuxièmes points A et B :

   - intégration de la courbure entre les deuxièmes points A et B pour déterminer un angle représentatif de la courbure ;
   - intégration dudit angle représentatif de la courbure pour déterminer un angle de courbure dans ledit repère cartésien ;
   - calcul des coordonnées du point B à partir des coordonnées du point A, dudit angle de courbure dans ledit repère cartésien et d'une distance parcourue ente lesdits points A et B.

**5.** Procédé selon l'une quelconque des revendications 1 à 4, pour lequel ladite valeur seuil correspond à un pourcentage de la largeur de ladite route.

**6.** Procédé selon la revendication 5, pour lequel ladite largeur est déterminée à partir de fonctions polynomiales représentatives des marquages au sol gauche et droite de la route, lesdits marquages étant déterminés à partir des données (10) représentatives de ladite au moins une image de l'environnement routier devant ledit véhicule.

**7.** Procédé selon l'une quelconque des revendications 1 à 6, pour lequel ladite première abscisse maximale est égale à 120 mètres.

**8.** Dispositif (8) de détermination de données représentatives du tracé d'une route dans un repère cartésien à deux dimensions, ledit repère étant associé à un véhicule circulant sur ladite route, ledit repère étant défini par un axe longitudinal et un axe latéral, ledit dispositif comprenant une mémoire (81) associée à au moins un processeur (80) configuré pour mettre en œuvre les étapes du procédé selon l'une quelconque des revendications 1 à 7.

**9.** Véhicule automobile comprenant le dispositif selon la revendication 8.

**10.** Produit programme d'ordinateur comportant des instructions adaptées pour l'exécution des étapes du procédé selon l'une des revendications 1 à 7, lorsque le programme d'ordinateur est exécuté par au moins un processeur.

**Patentansprüche**

**1.** Computerimplementiertes Verfahren zum Bestimmen von Daten, die für den Verlauf einer Straße in einem zweidimensionalen kartesischen Koordinatensystem (2) repräsentativ sind, wobei das Koordinatensystem mit einem Fahrzeug (20) verbunden ist, das auf der Straße fährt, wobei das Koordinatensystem (2) durch eine Längsachse und eine Querachse definiert ist, wobei das Verfahren die Schritte umfasst:

- Bestimmung (91) eines ersten Satzes von ersten Koordinatenpunkten (x1, (y1) in dem Koordinatensystem aus Daten (10), die für mindestens ein Bild der Straßenumgebung vor dem Fahrzeug (20) repräsentativ sind, wobei diese ersten Punkte repräsentativ für die Krümmung der Straße zwischen einer ersten minimalen Abszisse und einer ersten maximalen Abszisse entlang der Längsachse sind, die erste Mindestabszisse, die dem Ursprung des Bezugspunktes (2) entspricht;
- Bestimmung (92) eines zweiten Satzes von zweiten Koordinatenpunkten (x2, (y2) in der Benchmark (2) aus Daten (11), die die Straßenumgebung des Fahrzeugs (20) abbilden, wobei die zweiten Punkte repräsentativ für die Krümmung der Straße zwischen einer zweiten minimalen Abszisse und einer zweiten maximalen Abszisse entlang der Längsachse sind, wobei die zweite minimale Abszisse dem Ursprung des Referenzpunkts entspricht und die zweite maximale Abszisse größer als das erste Minimum ist Abszisse, wobei jeder erste Punkt der ersten Menge einem zweiten Punkt der zweiten Menge entspricht, indem der erste Punkt und der zweite entsprechende Punkt die gleiche x-Achse haben;
- Bestimmung (93) des ersten kleinsten x-Koordinatenwerts ($X_p$), bei dem der Absolutwert der Differenz zwischen der y-Koordinate eines ersten Punktes (61) und der y-Koordinate des zweiten entsprechenden Punktes (62) größer als ein Schwellenwert ist;
- Änderung (94) des y-Koordinatenwerts jedes zweiten Punktes des zweiten Satzes durch Addition dieser Differenz;
- Bestimmung (95) der für den Straßenverlauf repräsentativen Daten aus den ersten Punkten, deren erste Abszisse kleiner ist als der Wert der ersten kleinsten x-Achse, und aus den zweiten Punkten, deren zweite Abszisse größer als die erste kleinste x-Achse ist.

**2.** Verfahren nach Anspruch 1, wobei der erste Satz von ersten Koordinatenpunkten aus einer Polynomfunktion dritter Ordnung bestimmt wird, wobei die Koeffizienten der Funktion aus den Daten (10) bestimmt werden, die für mindestens ein Bild der Straßenumgebung vor dem Fahrzeug (20) repräsentativ sind.

**3.** Verfahren nach einem der Ansprüche 1 und 2, wobei die Bestimmung eines zweiten Satzes von zweiten Punkten die folgenden Schritte umfasst:

- Bestimmung eines Satzes von Werten, der für die Krümmung der Straße repräsentativ ist, aus Kartierungsdaten der Straßenumgebung vor dem Fahrzeug, wobei jeder Wert des Satzes mit einer Entfernung vom Fahrzeug gemäß einem anderen Koordinatensystem, dem zweidimensionalen kartesischen Koordinatensystem, verbunden ist;
- Transformieren des Satzes von Werten und der zugehörigen Entfernungen in den zweiten Satz von zweiten Punkten, ausgedrückt in dem zweidimensionalen kartesischen Koordinatensystem.

4. Verfahren nach Anspruch 3, wobei die Umwandlung für ein Paar der zweiten Punkte A und B umfasst:

- Integration der Krümmung zwischen den zweiten Punkten A und B, um einen repräsentativen Winkel der Krümmung zu bestimmen;
- Integration des repräsentativen Krümmungswinkels zur Bestimmung eines Krümmungswinkels in dem kartesischen Koordinatensystem;
- Berechnung der Koordinaten des Punktes B aus den Koordinaten des Punktes A, des Krümmungswinkels im kartesischen Koordinatensystem und der zwischen den Punkten A und B zurückgelegten Strecke.

5. Verfahren nach einem der Ansprüche 1 bis 4, wobei der Schwellenwert einem Prozentsatz der Breite der Straße entspricht.

6. Verfahren nach Anspruch 5, wobei die Breite aus Polynomfunktionen bestimmt wird, die für die linken und rechten Fahrbahnmarkierungen repräsentativ sind, wobei die Markierungen aus den Daten (10) bestimmt werden, die für mindestens ein Bild der Straßenumgebung vor dem Fahrzeug repräsentativ sind.

7. Verfahren nach einem der Ansprüche 1 bis 6, wobei die maximale erste Abszisse gleich 120 Meter ist.

8. Vorrichtung (8) zum Bestimmen von Daten, die für das Layout einer Straße in einem zweidimensionalen kartesischen Koordinatensystem repräsentativ sind, wobei das Koordinatensystem mit einem Fahrzeug verbunden ist, das auf dieser Straße fährt, wobei das Koordinatensystem durch eine Längsachse und eine Querachse definiert ist, wobei die Vorrichtung einen Speicher (81) umfasst, der mit mindestens einem Prozessor (80) verbunden ist, der konfiguriert ist, um die Verfahrensschritte gemäß einem der Ansprüche 1 bis 7 auszuführen.

9. Kraftfahrzeug, das die Vorrichtung nach Anspruch 8 umfasst.

10. Computerprogramm, das geeignete Anweisungen zum Ausführen der Verfahrensschritte nach einem der Ansprüche 1 bis 7 enthält, wobei das Computerprogramm von mindestens einem Prozessor ausgeführt wird.

**Claims**

1. A computer-implemented method for determining data representative of the route of a road in a two-dimensional Cartesian coordinate system (2), said coordinate system being associated with a vehicle (20) traveling on said road, said coordinate system (2) being defined by a longitudinal axis and a lateral axis, said method comprising the steps of:

- determination (91) of a first set of first coordinate points (x1, (y1) in said coordinate system from data (10) representative of at least one image of the road environment in front of said vehicle (20), said first points being representative of the curvature of the road between a first minimum abscissa and a first maximum abscissa along the longitudinal axis, said first minimum abscissa corresponding to the origin of said reference point (2);
- determination (92) of a second set of second coordinate points (x2, (y2) in said benchmark (2) from data (11) mapping the road environment of said vehicle (20), said second points being representative of the curvature of the road between a second minimum abscissa and a second maximum abscissa along the longitudinal axis, said second minimum abscissa corresponding to the origin of said reference point and said second maximum abscissa being greater than said first minimum abscissa, each first point of the first set corresponding to a second point of the second set in that the first point and the second corresponding point have the same x-axis;
- determination (93) of the first smallest x-coordinate value ($X_p$) for which the absolute value of the difference between the y-coordinate of a first point (61) and the y-coordinate of the second corresponding point (62) is greater than a threshold value;
- modification (94) of the y-coordinate value of each second point of the second set by the addition of said difference;
- determination (95) of said data representative of the route of the road from the first points whose first abscissa is less than said first smallest x-axis value and from the second points whose second abscissa is greater than said first smallest x-axis.

2. The method of claim 1, wherein said first set of first coordinate points is determined from a third-order polynomial function, wherein the coefficients of said function are determined from the data (10) representative of said at least one image of the road environment in front of said vehicle (20).

3. A method according to any one of claims 1 and 2, wherein said determination of a second set of second points comprises the following steps:

- determination of a set of values representative of the curvature of the road from mapping data of said road environment in front of said vehicle, each value of said set being associated with a distance from the vehicle according to a different coordinate system said two-dimensional Cartesian coordinate system;
- transforming said set of values and associated distances into said second set of second points expressed in said two-dimensional Cartesian coordinate system.

4. A method according to claim 3, wherein said transformation comprises, for a pair of second points A and B:

   - integration of the curvature between the second points A and B to determine a representative angle of the curvature;
   - integration of said representative angle of the curvature to determine an angle of curvature in said Cartesian coordinate system;
   - calculation of the coordinates of point B from the coordinates of point A, said angle of curvature in the said Cartesian coordinate system and a distance traveled between the said points A and B.

5. A method according to any one of claims 1 to 4, wherein said threshold value corresponds to a percentage of the width of said road.

6. The method of claim 5, wherein said width is determined from polynomial functions representative of the left and right road markings, said markings being determined from the data (10) representative of said at least one image of the road environment in front of said vehicle.

7. A method according to any one of claims 1 to 6, wherein said maximum first abscissa is equal to 120 meters.

8. A device (8) for determining data representative of the layout of a road in a two-dimensional Cartesian coordinate system, said coordinate system being associated with a vehicle traveling on said road, said coordinate system being defined by a longitudinal axis and a lateral axis, said device comprising a memory (81) associated with at least one processor (80) configured to carry out the process steps according to any one of claims 1 to 7.

9. A motor vehicle comprising the device according to claim 8.

10. A computer program containing suitable instructions for carrying out the process steps according to any of claims 1 to 7, where the computer program is executed by at least one processor.

[Fig. 1]

Données image  10

Transposition dans un repère cartésien  101

Tracé de route étendu  12

Comparaison et décalage  113

Transposition dans le repère cartésien  112

Obtention de données de courbure + distance  111

Données de cartographie  11

[Fig. 2]

[Fig. 3]

[Fig. 4]

[Fig. 5]

[Fig. 6]

EP 3 726 184 B1

[Fig. 7]

[Fig. 8]

15

[**Fig. 9**]

91 — Détermination 1<sup>er</sup> ensemble de points

92 — Détermination d'un 2<sup>ème</sup> ensemble de points

93 — Détermination plus petite valeur d'abscisse

94 — Modification ordonnées de 2<sup>èmes</sup> points

95 — Détermination du tracé de la route

**EP 3 726 184 B1**

## RÉFÉRENCES CITÉES DANS LA DESCRIPTION

**Documents brevets cités dans la description**

- US 2016259335 A
- US 20150353085 A1
- JP 2001331787 A

**Littérature non-brevet citée dans la description**

- Extended path prediction using camera and map data for lane keeping support. **POLYCHRONOPOULOS A. et al.** IEEE Intelligent Transportation Systems Conference (ITSC), Vienna, Austria. EEE, 13 September 2005, 602-607